# EUROPEAN PATENT APPLICATION

(11) **EP 4 543 104 A1**
(43) Date of publication of application: **23.04.2025**
(21) Application number: 23843183.7
(22) Date of filing: 15.06.2023
(51) Int. Cl.: H04W 52/38, H04W 52/24, H04W 4/80, H04W 76/10, H04B 17/318

(54) **DEVICE AND METHOD FOR CONTROLLING RADIO WAVES IN BLUETOOTH ENVIRONMENT**

(30) Priority: 22.07.2022 KR 20220091335; 01.09.2022 KR 20220110918
(71) Applicant: Samsung Electronics Co., Ltd., Suwon-si, Gyeonggi-do 16677 (KR)
(72) Inventor: KIM, Seonghun, Suwon-si Gyeonggi-do 16677 (KR); YOO, Woochun, Suwon-si Gyeonggi-do 16677 (KR); KIM, Yonghyun, Suwon-si Gyeonggi-do 16677 (KR); NOH, Donghoon, Suwon-si Gyeonggi-do 16677 (KR); AN, Jinwan, Suwon-si Gyeonggi-do 16677 (KR)
(74) Representative: Walaski, Jan Filip
(86) International application number: PCT/KR2023/008267
(87) International publication number: WO 2024/019330

(57) **Abstract**

The present disclosure relates to a device and method for controlling radio waves in a Bluetooth environment, wherein the Bluetooth device can: confirm information about the connected Bluetooth channel and information about Bluetooth signal strength; transmit, at the strength of the connected signal, a first advertising message including the Bluetooth channel information through an advertising channel; use a signal strength, measured by a nearby Bluetooth device, to determine whether there is sufficient coordination when a second advertising message including the measured signal strength is received from the nearby Bluetooth device; and adjust the connected signal strength or change the Bluetooth channel according to the determination result.

## Description

### TECHNICAL FIELD

The following embodiments relate to a technique for radio control of a Bluetooth device in a Bluetooth environment.

### BACKGROUND ART

In wireless communication technology, there has always been a demand for using multiple devices in a small area. Like the methods used in other communications, the Bluetooth environment also uses a control through multiple frequency channels to avoid congestion. 37 Bluetooth channels are assigned to be used for data connection in optimal environments, and each of these communications uses a different channel, providing comfortable multiple Bluetooth supports even in overlapping spaces.

However, with the widespread use of Bluetooth devices, many Bluetooth devices cause frequent congestion in the Bluetooth environment, and interference from other wireless signals also causes interference in the Bluetooth environment, increasing the possibility of a congested Bluetooth environment.

### DISCLOSURE OF THE INVENTION

### TECHNICAL SOLUTIONS

A method for radio control by a Bluetooth device according to an embodiment may include a first operation 212 of confirming Bluetooth channel information which is information about a Bluetooth channel connected with a Bluetooth target and Bluetooth signal strength information which indicates a signal strength of Bluetooth connection with the Bluetooth target.

The method for radio control by a Bluetooth device according to an embodiment may include a second operation 214 of transmitting a first advertise message including the Bluetooth channel information through an advertise channel at the signal strength of the connection.

The method for radio control by a Bluetooth device according to an embodiment may include a third operation 216 of receiving a second advertise message including a signal strength measured by a nearby Bluetooth device 120 or 130 from the nearby Bluetooth device 120 or 130 through the advertise channel.

The method for radio control by a Bluetooth device according to an embodiment may include a fourth operation 218 of determining whether coordination is sufficient using the signal strength measured by the nearby Bluetooth device 120 or 130.

The method for radio control by a Bluetooth device according to an embodiment may include an operation 230 of determining Bluetooth communication establishment with the Bluetooth target at the signal strength of the connection through the connected Bluetooth channel when a determination result shows that the coordination is sufficient.

A Bluetooth device for radio control according to an embodiment may include an antenna 112 or 897 configured to transmit a first advertise message and receive a second advertise message; a Bluetooth module 114 or 892 configured to establish Bluetooth communication with a Bluetooth target; and a processor 116 or 820 configured to control the Bluetooth module 114 or 892.

In the Bluetooth device for radio control according to an embodiment, the processor 116 or 820 may be configured to confirm Bluetooth channel information which is information about a Bluetooth channel connected with the Bluetooth target and Bluetooth signal strength information which indicates a signal strength of Bluetooth connection with the Bluetooth target.

In the Bluetooth device for radio control according to an embodiment, the processor 116 or 820 may be configured to transmit the first advertise message including the Bluetooth channel information through an advertise channel at the signal strength of the connection.

In the Bluetooth device for radio control according to an embodiment, the processor 116 or 820 may be configured to determine whether coordination is sufficient using a signal strength measured by a nearby Bluetooth device 120 or 130 when the second advertise message including the signal strength measured by the nearby Bluetooth device 120 or 130 is received from the nearby Bluetooth device 120 or 130 through the advertise channel.

In the Bluetooth device for radio control according to an embodiment, the processor 116 or 820 may be configured to determine Bluetooth communication establishment with the Bluetooth target at the signal strength of the connection through the connected Bluetooth channel when a determination result shows that the coordination is sufficient.

### BRIEF DESCRIPTION OF DRAWINGS

FIG. 1 is a diagram illustrating a schematic configuration of a Bluetooth device for radio control according to an embodiment.
FIG. 2 is a flowchart illustrating an operation for radio control in a Bluetooth device according to an embodiment.
FIG. 3 is a flowchart illustrating an operation of measuring and replying with a strength of a received signal by a Bluetooth device according to an embodiment.
FIG. 4 is a flowchart illustrating an operation for radio control in a Bluetooth device when a reception rate decreases according to an embodiment.
FIG. 5 is a flowchart illustrating an operation for radio control at preset time intervals in a Bluetooth device according to an embodiment.
FIG. 6 is a diagram illustrating an examination system environment according to an embodiment.
FIG. 7 is a diagram illustrating the broken-lined portion of FIG. 6.
FIG. 8 is a block diagram illustrating an electronic device in a network environment according to an embodiment.

### BEST MODE FOR CARRYING OUT THE INVENTION

Hereinafter, embodiments will be described in detail with reference to the accompanying drawings. However, various alterations and modifications may be made to the embodiments. Here, the embodiments are not meant to be limited by the descriptions of the present disclosure. The embodiments should be understood to include all changes, equivalents, and replacements within the idea and the technical scope of the disclosure.

The terminology used herein is for the purpose of describing particular embodiments only and is not intended to be limiting. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which the embodiments belong. Terms, such as those defined in commonly used dictionaries, are to be interpreted as having a meaning that is consistent with their meaning in the context of the relevant art and the present disclosure, and are not to be interpreted in an idealized or overly formal sense unless expressly so defined herein.

When describing the embodiments with reference to the accompanying drawings, like reference numerals refer to like components and a repeated description related thereto will be omitted. In the description of embodiments, detailed description of well-known related structures or functions will be omitted when it is deemed that such description will cause ambiguous interpretation of the present disclosure.

Also, in the description of the components, terms such as first, second, A, B, (a), (b) or the like may be used herein when describing components of the present disclosure. These terms are used only for the purpose of discriminating one constituent element from another constituent element, and the nature, the sequences, or the orders of the constituent elements are not limited by the terms. It should be noted that if one component is described as being "connected," "coupled" or "joined" to another component, the former may be directly "connected," "coupled," and "joined" to the latter or "connected", "coupled", and "joined" to the latter via another component.

The same name may be used to describe an element included in the embodiments described herein and an element having a common function. Unless otherwise mentioned, the descriptions of the examples may be applicable to the following examples and thus, duplicated descriptions will be omitted for conciseness.

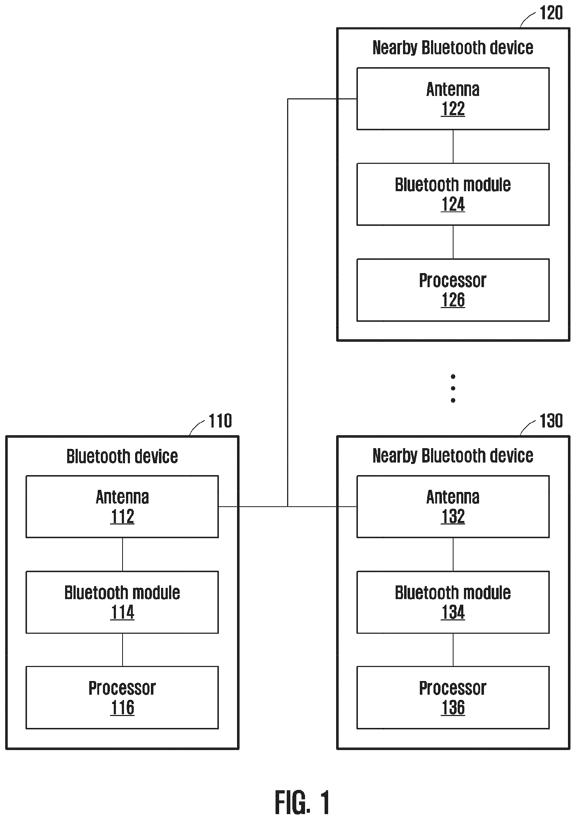

Hereinafter, a device and method for radio control in a Bluetooth environment will be described in detail with reference to FIGS. 1 to 8 attached hereto.

FIG. 1 is a diagram illustrating a schematic configuration of a Bluetooth device for radio control according to an embodiment.

Referring to FIG. 1, a Bluetooth environment may include a Bluetooth device 110 and nearby Bluetooth devices 120 and 130.

At this time, the Bluetooth device 110 may be a device that experiences a change, such as, for example, entering a new Bluetooth environment or establishing new Bluetooth communication.

That is, the Bluetooth device 110 and the nearby Bluetooth devices 120 and 130 may be devices having the same configuration. From the perspective of the nearby Bluetooth devices 120 and 130, the Bluetooth device 110 may be recognized as a nearby Bluetooth device located in the vicinity.

According to an embodiment, the Bluetooth device 110 may include an antenna 112, a Bluetooth module 114, and a processor 116.

According to an embodiment, the antenna 112 may transmit a first advertise message and receive a second advertise message through an advertise channel.

According to an embodiment, the Bluetooth module 114 may establish Bluetooth communication with a Bluetooth target device through the antenna 112. At this time, the Bluetooth target device may be a device that performs Bluetooth communication with the Bluetooth device 110. A typical example of the Bluetooth target device may be a Bluetooth gadget, which is a Bluetooth peripheral device such as, for example, Bluetooth wireless earphones, a Bluetooth keyboard, and/or a Bluetooth mouse.

According to an embodiment, the processor 116 may control the antenna 112 and the Bluetooth module 114.

According to an embodiment, the processor 116 may confirm Bluetooth channel information which is information about a Bluetooth channel connected with the Bluetooth target device and Bluetooth signal strength information which indicates a signal strength of Bluetooth connection with the Bluetooth target device.

According to an embodiment, the processor 116 may transmit the first advertise message including the Bluetooth channel information through the advertise channel at the signal strength of the connection. At this time, the first advertise message may include identification information (e.g., a media access control (MAC) address) of the Bluetooth device 110 with which the first advertise message is transmitted, in addition to the Bluetooth channel information.

According to an embodiment, the processor 116 may determine whether coordination is sufficient using a signal strength measured by the nearby Bluetooth device 120 or 130 when a second advertise message including the signal strength measured by the nearby Bluetooth device 120 or 130 is received from the nearby Bluetooth device 120 or 130 through the advertise channel. At this time, the signal strength measured by the nearby Bluetooth device 120 or 130 included in the second advertise message may be the received signal strength indicator (RSSI) when the nearby Bluetooth device 120 or 130 receives the first advertise message.

According to an embodiment, the processor 116 may determine that the coordination is sufficient if the measured signal strength received from the nearby Bluetooth device 120 or 130 is less than or equal to a reference value, and determine that the coordination is insufficient if the measured signal strength received from the nearby Bluetooth device 120 or 130 exceeds the reference value. At this time, sufficient coordination may indicate a case where it is determined that a Bluetooth device does not cause confusion in the Bluetooth communication of a nearby Bluetooth device, and may be a case where the measured signal strength received from the nearby Bluetooth device 120 or 130 is less than or equal to the reference value.

According to an embodiment, the processor 116 may determine Bluetooth communication establishment with the Bluetooth target device at the signal strength of the connection through the connected Bluetooth channel when a determination result shows that the coordination is sufficient.

According to an embodiment, the processor 116 may determine whether the signal strength of the connection with the Bluetooth target device is adjustable if the determination result shows that the coordination is insufficient. At this time, regarding whether the signal strength is adjustable, the processor may compare a first value obtained by subtracting the signal strength of the connection from a guaranteed minimum signal strength and a second value obtained by subtracting the reference value from the signal strength measured by the nearby Bluetooth device 120 or 130, and determine that the signal strength is adjustable if the first value is greater than or equal to the second value according to the comparison result, or may determine that the signal strength is not adjustable if the first value is less than the second value according to the comparison result. At this time, the guaranteed minimum signal strength and the reference value may be set in advance through experiments.

According to an embodiment, the processor 116 may control the Bluetooth module 114 to lower the signal strength of the connection with the Bluetooth target device by the second value if the signal strength is adjustable, that is, if the first value is greater than or equal to the second value according to the comparison result.

According to an embodiment, the processor 116 may select a Bluetooth channel having a lowest RSSI from available Bluetooth channels if the signal strength is not adjustable, that is, if the first value is less than the second value according to the comparison result, and control the Bluetooth module 114 to establish communication with the Bluetooth target device through the selected Bluetooth channel.

According to an embodiment, the processor 116 may re-determine whether the coordination is sufficient for the selected Bluetooth channel when re-establishing Bluetooth communication with the Bluetooth target device through the selected Bluetooth channel. At this time, re-determining whether the coordination is sufficient for the selected Bluetooth channel may be confirming channel information of the selected Bluetooth channel and the signal strength of the connection, transmitting a first advertise message, receiving a second advertise message, and determining the coordination is sufficient for the selected Bluetooth channel again.

According to an embodiment, the processor 116 may control the Bluetooth module 114 to measure an RSSI of a current Bluetooth channel, when a decrease in reception rate is detected by the Bluetooth device 110. At this time, the decrease in reception rate may occur due to a drop in packet transmission rate when channel erosion caused by communications that share the same frequency channel as Bluetooth, like Wi-Fi, causes large noise in a predetermined channel.

According to an embodiment, the processor 116 may select a Bluetooth channel having the lowest RSSI from available Bluetooth channels if the RSSI of the current Bluetooth channel exceeds the reference value according to the result of measuring the RSSI of the current Bluetooth channel, and control the Bluetooth module 114 to establish communication with the Bluetooth target device through the selected Bluetooth channel.

According to an embodiment, the processor 116 may re-determine whether the coordination is sufficient for the selected Bluetooth channel when re-establishing Bluetooth communication with the Bluetooth target through the selected Bluetooth channel, as described above.

According to an embodiment, the processor 116 may control the Bluetooth module 114 to maintain a current Bluetooth communication state if the RSSI of the current Bluetooth channel is less than or equal to the reference value according to the result of measuring the RSSI of the current Bluetooth channel.

According to an embodiment, the processor 116 may re-determine whether the coordination is sufficient for the currently connected Bluetooth channel at preset time intervals. At this time, re-determining whether the coordination is sufficient for the currently connected Bluetooth channel may be confirming channel information of the currently connected Bluetooth channel and the signal strength of the connection, transmitting a first advertise message, receiving a second advertise message, and determining the coordination is sufficient for the selected Bluetooth channel again.

According to an embodiment, the nearby Bluetooth devices 120 and 130 may also include antennas 122 and 132, Bluetooth modules 124 and 134, and processors 126 and 136, respectively.

According to an embodiment, the antenna 122 or 132 may receive a first advertise message and transmit a second advertise message through an advertise channel.

According to an embodiment, the Bluetooth module 124 or 134 may establish Bluetooth communication with a Bluetooth target device through the antenna 122 or 132. The Bluetooth module 124 or 134 may measure the signal strength when the first advertise message is received. At this time, the signal strength may be the RSSI when the first advertise message is received.

According to an embodiment, the processor 126 or 136 may control the antenna 122 or 132 and the Bluetooth module 124 or 134.

According to an embodiment, when the first advertise message is received, the processor 126 or 136 may control to measure a signal strength at which the first advertise message is received, generate the second advertise message including the measured signal strength, and transmit the second advertise message to the Bluetooth device 110 through the advertise channel.

Hereinafter, methods according to various embodiments of the present disclosure configured as described herein will be described with reference to the drawings.

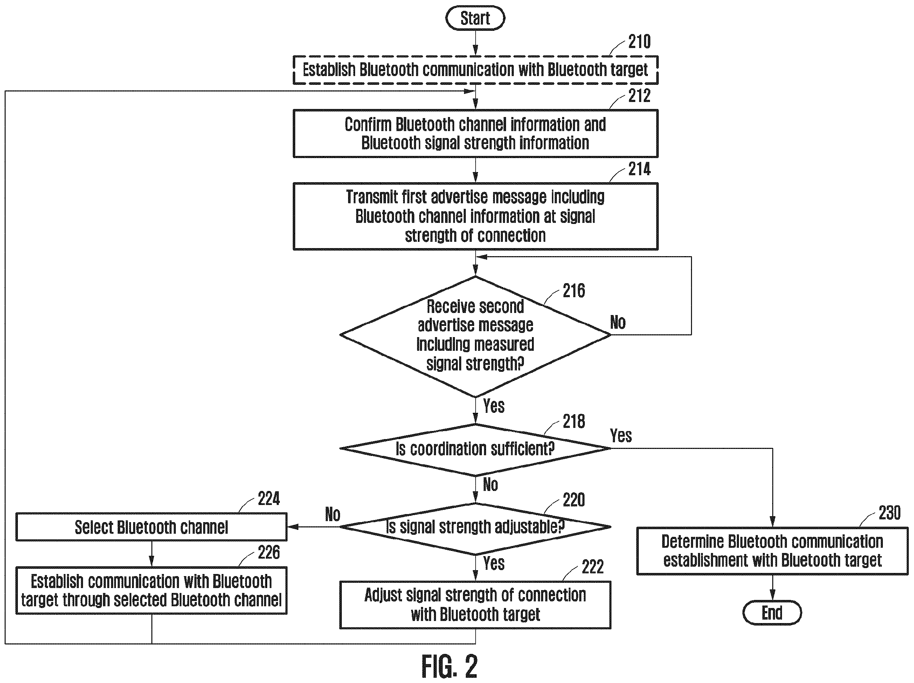

FIG. 2 is a flowchart illustrating an operation for radio control in a Bluetooth device according to an embodiment.

Referring to FIG. 2, the Bluetooth device 110 may establish Bluetooth communication between the Bluetooth device 110 and a Bluetooth target device in operation 210. If Bluetooth communication between the Bluetooth device 110 and the Bluetooth target device is already established, operation 210 may be omitted.

According to an embodiment, the Bluetooth device 110 may confirm Bluetooth channel information which is information about a Bluetooth channel connected with the Bluetooth target device and Bluetooth signal strength information which indicates a signal strength of Bluetooth connection with the Bluetooth target device in operation 212.

According to an embodiment, the Bluetooth device 110 may transmit the first advertise message including the Bluetooth channel information through the advertise channel at the signal strength of the connection in operation 214. At this time, the first advertise message may include identification information of the Bluetooth device 110 transmitting the first advertise message.

According to an embodiment, the Bluetooth device 110 may receive a second advertise message including the signal strength measured by the nearby Bluetooth device 120 or 130 from the nearby Bluetooth device 120 or 130 through the advertise channel in operation 216. At this time, the signal strength measured by the nearby Bluetooth device 120 or 130 included in the second advertise message may be the RSSI when the nearby Bluetooth device 120 or 130 receives the first advertise message.

According to an embodiment, the Bluetooth device 110 may determine whether coordination is sufficient using the signal strength measured by the nearby Bluetooth device 120 or 130 in operation 218. At this time, determining whether the coordination is sufficient may include determining that the coordination is sufficient when the measured signal strength received from the nearby Bluetooth device 120 or 130 is less than or equal to the reference value, and determining that the coordination is insufficient when the measured signal strength received from the nearby Bluetooth device 120 or 130 exceeds the reference value. For example, the reference value may be a value that serves as a criterion for determining whether a signal from the Bluetooth device 110 interferes with the nearby Bluetooth device 120 or 130, and may be a value that serves as a criterion for determining whether the coordination is sufficient or not.

According to an embodiment, the Bluetooth device 110 may determine Bluetooth communication establishment with the Bluetooth target device at the signal strength of the connection through the connected Bluetooth channel in operation 230 when a determination result shows that the coordination is sufficient.

According to an embodiment, the Bluetooth device 110 may determine whether the signal strength of the connection with the Bluetooth target device is adjustable if the determination result shows that the coordination is insufficient in operation 220.

In operation 220, regarding whether the signal strength is adjustable, the Bluetooth device may compare a first value obtained by subtracting the signal strength of the connection from a guaranteed minimum signal strength and a second value obtained by subtracting the reference value from the signal strength measured by the nearby Bluetooth device 120 or 130, and determine that the signal strength is adjustable if the first value is greater than or equal to the second value according to the comparison result, or may determine that the signal strength is not adjustable if the first value is less than the second value according to the comparison result.

According to an embodiment, the Bluetooth device 110 may lower the signal strength of the connection with the Bluetooth target device by the second value in operation 222, if the signal strength is adjustable according to the determination result of operation 220, that is, if the first value is greater than or equal to the second value according to the comparison result.

After operation 222, the Bluetooth device 110 may return to operation 212 and repeat the series of operations subsequent thereto.

According to an embodiment, the Bluetooth device 110 may select a Bluetooth channel having a lowest RSSI from available Bluetooth channels in operation 224, if the signal strength is not adjustable as the determination result of operation 220, that is, if the first value is less than the second value according to the comparison result, and establish communication with the Bluetooth target device through the selected Bluetooth channel in operation 226.

After operation 226, the Bluetooth device 110 may return to operation 212 and repeat the series of operations subsequent thereto.

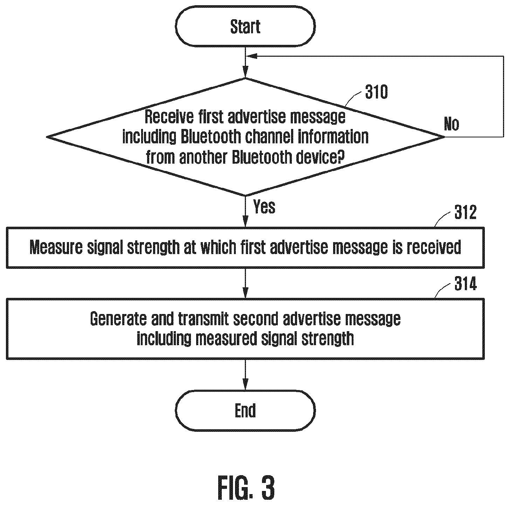

FIG. 3 is a flowchart illustrating an operation of measuring and replying with a strength of a received signal by a Bluetooth device according to an embodiment.

Referring to FIG. 3, when a first advertise message including Bluetooth channel information is received from another Bluetooth device 110 in operation 310, the nearby Bluetooth device 120 or 130 may measure the signal strength at which the first advertise message is received in operation 312.

According to an embodiment, the nearby Bluetooth device 120 or 130 may generate a second advertise message including the measured signal strength and transmit the second advertise message to the Bluetooth device 110 through an advertise channel in operation 314.

Although it is described in the description of FIG. 3 that the operations of FIG. 3 are performed by the nearby Bluetooth device 120 or 130, the operations of FIG. 3 may also be performed by the Bluetooth device 110 if the Bluetooth device 110 receives a first advertise message from another Bluetooth device.

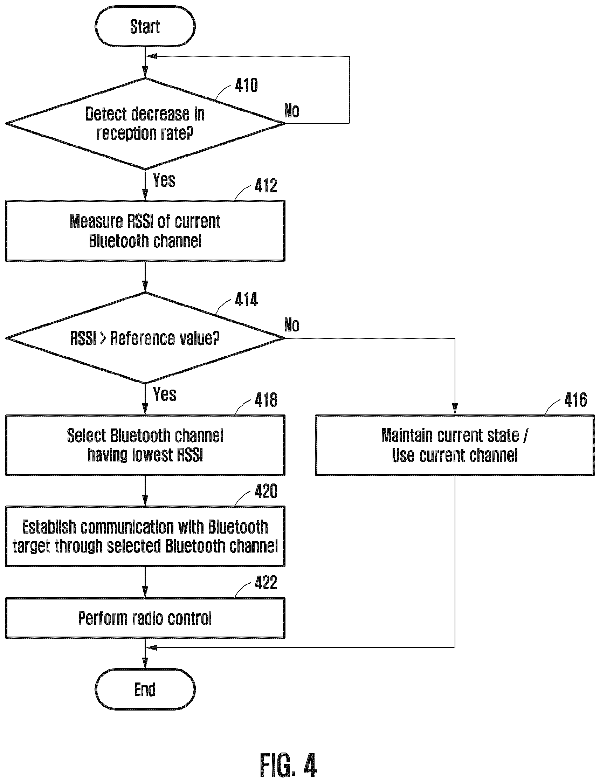

FIG. 4 is a flowchart illustrating an operation for radio control in a Bluetooth device when a reception rate decreases according to an embodiment.

Referring to FIG. 4, when a decrease in reception rate from a Bluetooth target device is detected in operation 410, the Bluetooth device 110 may measure the RSSI of a currently connected Bluetooth channel in operation 412.

The Bluetooth device 110 may verify whether the RSSI is greater than a reference value in operation 414.

If the verification result of operation 414 shows that the RSSI of the current Bluetooth channel is less than or equal to the reference value, the current Bluetooth communication state may be maintained in operation 416.

If the verification result of operation 414 shows that the RSSI of the current Bluetooth channel exceeds the reference value, a Bluetooth channel having the lowest RSSI may be selected from available Bluetooth channels in operation 418.

The Bluetooth device 110 may establish communication with the Bluetooth target device through the selected Bluetooth channel in operation 420.

Then, the Bluetooth device 110 may perform the radio control of FIG. 2 in operation 422. At this time, operation 210 of FIG. 2 may be omitted.

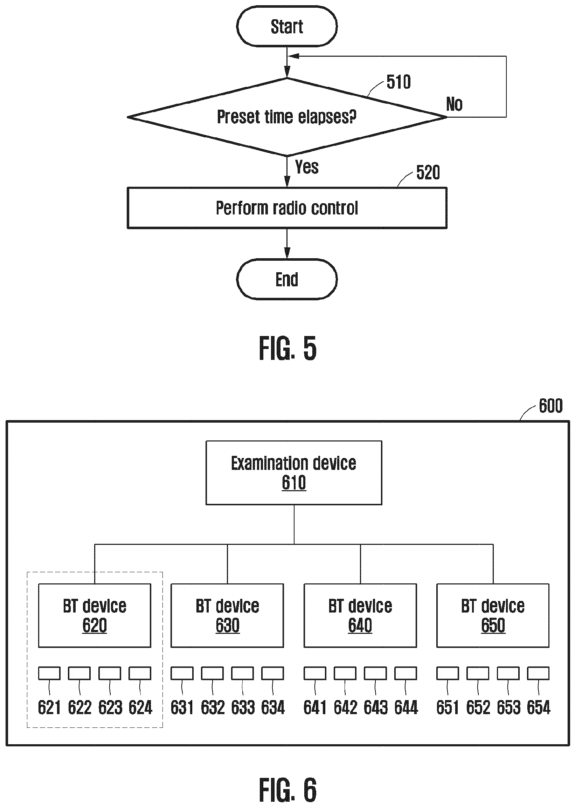

FIG. 5 is a flowchart illustrating an operation for radio control at preset time intervals in a Bluetooth device according to an embodiment.

Referring to FIG. 5, the Bluetooth device 110 may verify whether a preset time elapses.

When the preset time elapses in operation 510, the Bluetooth device 110 may perform the radio control of FIG. 2 in operation 520. According to an embodiment, if the Bluetooth device 110 (or the processor 116) is already connected with a Bluetooth target device through a Bluetooth channel, operation 210 of FIG. 2 may be omitted.

The techniques for radio control in a Bluetooth environment proposed in various embodiments of the present disclosure may provide an efficient Bluetooth communication environment in consideration of coordination when producing Bluetooth gadgets corresponding to Bluetooth target devices and examining a large number of Bluetooth gadgets at once on a production line that examines the produced Bluetooth target devices.

In some aspects, the techniques for radio control in a Bluetooth environment proposed in various embodiments of the present disclosure may be used to efficiently manage a wireless communication environment with each drone in an environment where clustered drones are controlled.

In some aspects, the techniques for radio control in a Bluetooth environment proposed in various embodiments of the present disclosure may be used to efficiently manage a wireless communication environment with each transport robot in an environment such as, for example, a fulfillment center where many transport robots that use wireless communication are present, for example, Amazon.

In some aspects, the techniques for radio control in a Bluetooth environment proposed in various embodiments of the present disclosure may also be applied to an Internet of Things (IoT) environment where wireless communication is congested due to many IoT devices.

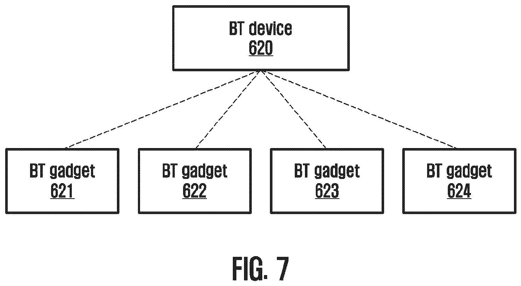

Hereinafter, an example of an examination system environment of the production line that examines Bluetooth gadgets, to which the techniques for radio control in a Bluetooth environment proposed in various embodiments of the present disclosure are applied, will be described with reference to FIGS. 6 and 7.

FIG. 6 is a diagram illustrating an examination system environment according to an embodiment.

FIG. 7 is a diagram illustrating the broken-lined portion of FIG. 6.

Referring to FIGS. 6 and 7, an examination system 600 may include an examination device 610 and multiple Bluetooth (BT) devices 620, 630, 640, and 650.

The examination device 610 may establish wired or wireless communication with the multiple Bluetooth devices 620, 630, 640, and 650 and transmit instructions for examination of multiple Bluetooth gadgets 621 to 624, 631 to 634, 641 to 644, and 651 to 654 to be examined to the multiple Bluetooth devices 620, 630, 640, and 650, and each of the multiple Bluetooth devices 620, 630, 640, and 650 may provide an examination result to the examination device 610.

At this time, the examination device 610 and the multiple Bluetooth devices 620, 630, 640, and 650 may be connected through universal asynchronous receiver/transmitter (UART) communication or USB communication when connected using wires. However, embodiments are not limited thereto, and various wired communication technologies may be used. In some aspects, the examination device 610 and the multiple Bluetooth devices 620, 630, 640, and 650 may be connected through Wi-Fi communication when connected wirelessly. However, embodiments are not limited thereto, and various wireless communication technologies may be used.

The techniques for radio control in a Bluetooth environment proposed in various embodiments of the present disclosure may be used to increase coordination between the multiple Bluetooth devices 620, 630, 640, and 650 in the example of FIGS. 6 and 7.

The examples applied to FIGS. 6 and 7 are described as follows.

For example, it may be assumed that a standard is set to guarantee an RSSI value of -75 dB in the examination environment, and the optimal SNR for maintaining the examination environment is specified as 10 times (10 dB).

In this case, the optimal value (RSSI value) for -75 dB may be -85 dB. That is, -75 dB may be the guaranteed minimum signal strength, and -85 dB may be the signal strength for connection and the reference value. At this time, the signal strength of connection may be changed through adjustment.

According to an embodiment, when a Bluetooth communication establishment of a new Bluetooth gadget 621 is initiated in a Bluetooth device 620 (e.g., the Bluetooth device 110 of FIG. 1), the Bluetooth device 620 may transmit a first advertise message to another Bluetooth device 630, 640, or 650 (e.g., the nearby Bluetooth device 120 or 130 of FIG. 1) through an advertise channel.

According to an embodiment, the Bluetooth device 620 may verify whether coordination is sufficient, as follows, using the RSSI included in a second advertise message received from another Bluetooth device 630, 640, or 650.

According to an embodiment, the RSSI measured by another Bluetooth device 630 may be -89 dB. -89 dB may be a value with a 4-dB margin from the optimum value (-85 dB).

According to an embodiment, the RSSI measured by another Bluetooth device 640 may be -91 dB. -91 dB may be a value with a 6-dB margin from the optimum value (-85 dB).

According to an embodiment, the RSSI measured by another Bluetooth device 650 may be -87 dB. -87 dB may be a value with a 2-dB margin from the optimum value (-85 dB).

According to an embodiment, the Bluetooth device 620 may compare a first value (10 dB) obtained by subtracting the signal strength of the connection (-85 dB) from the guaranteed minimum signal strength (-75 dB) and a second value (-4 dB, -6 dB, or - 2 dB) obtained by subtracting the reference value (-85 dB) from the signal strength (-89 dB, -91 dB, or -87 dB) measured by the nearby Bluetooth device 120 or 130, and determine that the signal strength is adjustable since the comparison result shows that the first value (10 dB) is greater than or equal to the second value (-4 dB, -6 dB, or -2 dB).

According to an embodiment, the Bluetooth device 620 may maintain the current Bluetooth communication or increase the signal strength of the Bluetooth connection between the Bluetooth device 620 and the Bluetooth gadget 621 by 2 dB, which is the lowest value among the margin values.

According to an embodiment, in changing the signal strength of the Bluetooth connection, the Bluetooth device 620 may perform an operation of transmitting a first advertise message, receiving a second advertise message, and determining whether coordination is sufficient again.

For example, it may be assumed that a standard is set to guarantee an RSSI value of -75 dB in the examination environment, the optimal SNR for maintaining the examination environment is specified as 10 times (10 dB), and the minimum SNR for maintaining the examination environment is specified as 4 times (6 dB).

In this case, the minimum value (RSSI value) for -75dB may be -81 dB. That is, -75 dB may be the guaranteed minimum signal strength, and -81 dB may be the signal strength for connection and the reference value.

According to an embodiment, when a Bluetooth communication establishment of a new Bluetooth gadget 621 is initiated in the Bluetooth device 620, the Bluetooth device 620 may transmit a first advertise message to another Bluetooth device 630, 640, or 650 through an advertise channel.

According to an embodiment, the Bluetooth device 620 may verify whether coordination is sufficient, as follows, using the RSSI included in a second advertise message received from another Bluetooth device 630, 640, or 650.

According to an embodiment, the RSSI measured by another Bluetooth device 630 may be -75 dB. -75 dB may be a value with a 6-dB excess from the minimum value (-81 dB).

According to an embodiment, the RSSI measured by another Bluetooth device 640 may be -77 dB. -77 dB may be a value with a 4-dB excess from the minimum value (-81 dB).

According to an embodiment, the RSSI measured by another Bluetooth device 650 may be -76 dB. -76 dB may be a value with a 5-dB excess from the minimum value (-81 dB).

According to an embodiment, the Bluetooth device 620 may compare a first value (6 dB) obtained by subtracting the signal strength of the connection (-81 dB) from the guaranteed minimum signal strength (-75 dB) and a second value (6 dB, 4 dB, or 5 dB) obtained by subtracting the reference value (-81 dB) from the signal strength (-75 dB, -77 dB, -76 dB) measured by the nearby Bluetooth device 120 or 130, and determine that the signal strength is adjustable since the comparison result shows that the first value (6 dB) is greater than or equal to the second value (6 dB, 4 dB, or 5 dB).

According to an embodiment, the Bluetooth device 620 may lower the signal strength of the Bluetooth connection between the Bluetooth device 620 and the Bluetooth gadget 621 by 6 dB, which is the largest excess from the minimum value among the measured RSSI values, to maintain coordination in the examination environment.

According to an embodiment, in changing the signal strength of the Bluetooth connection, the Bluetooth device 620 may perform an operation of transmitting a first advertise message, receiving a second advertise message, and determining whether coordination is sufficient again.

For example, it may be assumed that a standard is set to guarantee an RSSI value of -75 dB in the examination environment, the optimal SNR for maintaining the examination environment is specified as 10 times (10 dB), and the minimum SNR for maintaining the examination environment is specified as 4 times (6 dB).

In this case, the minimum value (RSSI value) for -75dB may be -81 dB. That is, -75 dB may be the guaranteed minimum signal strength, and -81 dB may be the signal strength for connection and the reference value.

According to an embodiment, when a Bluetooth communication establishment of a new Bluetooth gadget 621 is initiated in the Bluetooth device 620, the Bluetooth device 620 may transmit a first advertise message to another Bluetooth device 630, 640, or 650 through an advertise channel.

According to an embodiment, the Bluetooth device 620 may verify whether coordination is sufficient, as follows, using the RSSI included in a second advertise message received from another Bluetooth device 630, 640, or 650.

According to an embodiment, the RSSI measured by another Bluetooth device 630 may be -75 dB. -75 dB may be a value with a 6-dB excess from the minimum value (-81 dB).

According to an embodiment, the RSSI measured by another Bluetooth device 640 may be -77 dB. -77 dB may be a value with a 4-dB excess from the minimum value (-81 dB).

According to an embodiment, the RSSI measured by another Bluetooth device 650 may be -73 dB. -73 dB may be a value with an 8-dB excess from the minimum value (-81 dB).

According to an embodiment, the Bluetooth device 620 may compare a first value (6 dB) obtained by subtracting the signal strength of the connection (-81 dB) from the guaranteed minimum signal strength (-75 dB) and a second value (6 dB, 4 dB, or 8 dB) obtained by subtracting the reference value (-81 dB) from the signal strength (-75 dB, -77 dB, or -73 dB) measured by the nearby Bluetooth device 120 or 130, and determine that the signal strength is not adjustable since the comparison result shows that the first value (6 dB) is less than the second value (6 dB, 4 dB, or 8 dB).

According to an embodiment, the Bluetooth device 620 may search for another channel since the communication state of the Bluetooth device 620 is poor when lowering the signal strength of the Bluetooth connection between the Bluetooth device 620 and the Bluetooth gadget 621 by 8 dB, which is the largest excess from the minimum value among the measured RSSI values, to maintain coordination in the examination environment.

According to an embodiment, the Bluetooth device 620 may confirm the RSSI values of found channels and select a channel with the lowest RSSI value.

For example, if it is detected that the packet loss rate continues to exceed a preset threshold while conducting a test on a predetermined channel in the examination environment, the Bluetooth device 620 may search for other channels, confirm the RSSI values of found channels, and select a channel with the lowest RSSI value.

The packet loss rate exceeds the preset threshold because Bluetooth has weak radio waves due to the characteristics of using the 2.4 GHz common frequency domain and having low power consumption and thus, may be interfered with by other communication means (e.g., Wi-Fi). In this case, the Bluetooth device 620 may search for other channels to avoid other communication means.

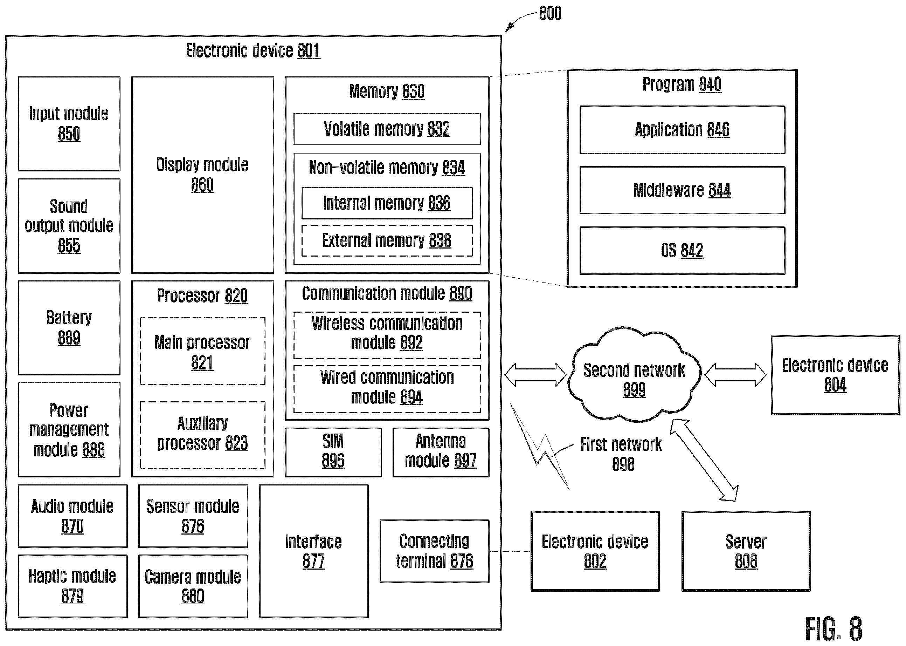

FIG. 8 is a block diagram illustrating an electronic device in a network environment according to an embodiment.

Referring to FIG. 8, an electronic device 801 (e.g., the Bluetooth device 110 of FIG. 1 or the Bluetooth device 620 of FIG. 6) in a network environment 800 may communicate with an electronic device 802 via a first network 898 (e.g., a short-range wireless communication network), or at least one of an electronic device 804 or a server 808 via a second network 899 (e.g., a long-range wireless communication network). According to an embodiment, the electronic device 801 may communicate with the electronic device 804 via the server 808. According to an embodiment, the electronic device 801 may include a processor 820, the memory 830, an input module 850, a sound output module 855, a display module 860, an audio module 870, a sensor module 876, an interface 877, a connecting terminal 878, a haptic module 879, a camera module 880, a power management module 888, a battery 889, a communication module 890, a subscriber identification module (SIM) 896, or an antenna module 897. In some embodiments, at least one of the components (e.g., the connecting terminal 878) may be omitted from the electronic device 801, or one or more other components may be added to the electronic device 801. In some embodiments, some of the components (e.g., the sensor module 876, the camera module 880, or the antenna module 897) may be integrated as a single component (e.g., the display module 860).

The processor 820 may execute, for example, software (e.g., a program 840 to control at least one other component (e.g., a hardware or software component) of the electronic device 801 coupled with the processor 820, and may perform various data processing or computation. According to an embodiment, as at least a part of data processing or computation, the processor 820 may store a command or data received from another component (e.g., the sensor module 876 or the communication module 890) in a volatile memory 832, process the command or the data stored in the volatile memory 832, and store resulting data in a non-volatile memory 834. According to an embodiment, the processor 820 may include the main processor 821 (e.g., a CPU or an application processor (AP)), or an auxiliary processor 823 (e.g., a GPU, an NPU, an ISP, a sensor hub processor, or a CP) that is operable independently from, or in conjunction with the main processor 821. In an example in which the electronic device 801 includes the main processor 821 and the auxiliary processor 823, the auxiliary processor 823 may be adapted to consume less power than the main processor 821 or to be specific to a specified function. The auxiliary processor 823 may be implemented separately from the main processor 821 or as a part of the main processor 821.

The auxiliary processor 823 may control at least some of functions or states related to at least one (e.g., the display module 860, the sensor module 876, or the communication module 890 of the components of the electronic device 801, instead of the main processor 821 while the main processor 821 is in an inactive (e.g., sleep) state, or together with the main processor 821 while the main processor 821 is an active state (e.g., executing an application). According to an embodiment, the auxiliary processor 823 (e.g., an ISP or a CP) may be implemented as a portion of another component (e.g., the camera module 880 or the communication module 890) that is functionally related to the auxiliary processor 823. According to an embodiment, the auxiliary processor 823 (e.g., an NPU) may include a hardware structure specified for processing of an artificial intelligence (AI) model. An artificial intelligence model may be generated by machine learning. Such learning may be performed, e.g., by the electronic device 801 where the artificial intelligence is performed, or via a separate server (e.g., the server 808. Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network, or a combination of two or more thereof, but is not limited thereto. The artificial intelligence model may, additionally or alternatively, include a software structure other than the hardware structure.

At least one or a combination of the processor 820, the main processor 821 or the auxiliary processor 823 may perform the operation of the processor 116 of FIG. 1.

The memory 830 may store various data used by at least one component (e.g., the processor 820 or the sensor module 876 of the electronic device 801. The various data may include, for example, software (e.g., the program 840 and input data or output data for a command related thereto. The memory 830 may include the volatile memory 832 or the non-volatile memory 834.

The program 840 may be stored in the memory 830 as software, and may include, for example, an operating system (OS) 842, middleware 844, or an application 846.

The input module 850 may receive a command or data to be used by another component (e.g., the processor 820 of the electronic device 801, from the outside (e.g., a user) of the electronic device 801. The input module 850 may include, for example, a microphone, a mouse, a keyboard, a key (e.g., a button), or a digital pen (e.g., a stylus pen).

The sound output module 855 may output sound signals to the outside of the electronic device 801. The sound output module 855 may include, for example, a speaker or a receiver. The speaker may be used for general purposes, such as, for example, playing multimedia or playing a record. The receiver may be used to receive an incoming call. According to an embodiment, the receiver may be implemented separately from the speaker or as a part of the speaker.

The display module 860 may visually provide information to the outside (e.g., a user) of the electronic device 801. The display module 860 may include, for example, a display, a hologram device, or a projector and control circuitry to control a corresponding one of the display, hologram device, and projector. According to an embodiment, the display module 860 may include a touch sensor adapted to detect a touch, or a pressure sensor adapted to measure the intensity of force incurred by the touch.

The audio module 870 may convert a sound into an electrical signal and vice versa. According to an embodiment, the audio module 870 may obtain the sound via the input module 850 or output the sound via the sound output module 855 or an external electronic device (e.g., the electronic device 802 such as, for example, a speaker or a headphone) directly or wirelessly connected with the electronic device 801.

The sensor module 876 may detect an operational state (e.g., power or temperature) of the electronic device 801 or an environmental state (e.g., a state of a user) external to the electronic device 801, and then generate an electrical signal or data value corresponding to the detected state. According to an embodiment, the sensor module 876 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 877 may support one or more specified protocols to be used for the electronic device 801 to be coupled with the external electronic device (e.g., the electronic device 802 directly (e.g., wiredly) or wirelessly. According to an embodiment, the interface 877 may include, for example, a high-definition multimedia interface (HDMI), a universal serial bus (USB) interface, a secure digital (SD) card interface, or an audio interface.

The connecting terminal 878 may include a connector via which the electronic device 801 may be physically connected with an external electronic device (e.g., the electronic device 802. According to an embodiment, the connecting terminal 878 may include, for example, an HDMI connector, a USB connector, an SD card connector, or an audio connector (e.g., a headphone connector).

The haptic module 879 may convert an electrical signal into a mechanical stimulus (e.g., a vibration or a movement) or an electrical stimulus which may be recognized by a user via his or her tactile sensation or kinesthetic sensation. According to an embodiment, the haptic module 879 may include, for example, a motor, a piezoelectric element, or an electric stimulator.

The camera module 880 may capture a still image and moving images. According to an embodiment, the camera module 880 may include one or more lenses, image sensors, ISPs, or flashes.

The power management module 888 may manage power supplied to the electronic device 801. According to an embodiment, the power management module 888 may be implemented as, for example, at least a part of a power management integrated circuit (PMIC).

The battery 889 may supply power to at least one component of the electronic device 801. According to an embodiment, the battery 889 may include, for example, a primary cell which is not rechargeable, a secondary cell which is rechargeable, or a fuel cell.

The communication module 890 may support establishing a direct (e.g., wired) communication channel or a wireless communication channel between the electronic device 801 and the external electronic device (e.g., the electronic device 802, the electronic device 804, or the server 808 and performing communication via the established communication channel. The communication module 890 may include one or more communication processors that operate independently of the processor 820 (e.g., an application processor) and support direct (e.g., wired) communication or wireless communication. According to an embodiment, the communication module 890 may include a wireless communication module 892 (e.g., a cellular communication module, a short-range wireless communication module, or a global navigation satellite system (GNSS) communication module) or a wired communication module 894 (e.g., a local area network (LAN) communication module, or a power line communication (PLC) module). A corresponding one of these communication modules may communicate with the external electronic device 804 via the first network 898 (e.g., a short-range communication network, such as, for example, BluetoothTM, wireless-fidelity (Wi-Fi) direct, or infrared data association (IrDA)) or the second network 899 (e.g., a long-range communication network, such as, for example, a legacy cellular network, a 5G network, a next-generation communication network, the Internet, or a computer network (e.g., a LAN or a wide area network (WAN))). These various types of communication modules may be implemented as a single component (e.g., a single chip), or may be implemented as multiple components (e.g., multiple chips) separate from each other. The wireless communication module 892 may identify and authenticate the electronic device 801 in a communication network, such as, for example, the first network 898 or the second network 899, using subscriber information (e.g., international mobile subscriber identity (IMSI)) stored in the SIM 896. The wireless communication module 892 may perform the operation of the Bluetooth module 114 of FIG. 1.

The wireless communication module 892 may support a 5G network after a 4G network, and a next-generation communication technology, e.g., a new radio (NR) access technology. The NR access technology may support enhanced mobile broadband (eMBB), massive machine type communications (mMTC), or ultra-reliable and low-latency communications (URLLC). The wireless communication module 892 may support a high-frequency band (e.g., a mmWave band) to achieve, e.g., a high data transmission rate. The wireless communication module 892 may support various technologies for securing performance on a high-frequency band, such as, e.g., beamforming, massive multiple-input and multiple-output (massive MIMO), full dimensional MIMO (FD-MIMO), an array antenna, analog beamforming, or a large scale antenna. The wireless communication module 892 may support various requirements specified in the electronic device 801, an external electronic device (e.g., the electronic device 804, or a network system (e.g., the second network 899). According to an embodiment, the wireless communication module 892 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 897 may transmit or receive a signal or power to or from the outside (e.g., the external electronic device) of the electronic device 801. According to an embodiment, the antenna module 897 may include an antenna including a radiating element including a conductive material or a conductive pattern formed in or on a substrate (e.g., a printed circuit board (PCB)). According to an embodiment, the antenna module 897 may include a plurality of antennas (e.g., array antennas). In such a case, at least one antenna appropriate for a communication scheme used in a communication network, such as, for example, the first network 898 or the second network 899, may be selected by, for example, the communication module 890 from the plurality of antennas. The signal or the power may be transmitted or received between the communication module 890 and the external electronic device via the at least one selected antenna. According to an embodiment, another component (e.g., a radio frequency integrated circuit (RFIC)) other than the radiating element may be additionally formed as part of the antenna module 897. The antenna module 897 may perform the operation of the antenna 112 of FIG. 1.

According to various embodiments, the antenna module 897 may form a mmWave antenna module. According to an embodiment, the mm Wave antenna module may include a PCB, an RFIC disposed on a first surface (e.g., a bottom surface) of the PCB or adjacent to the first surface and capable of supporting a designated a high-frequency band (e.g., the mm Wave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the described herein components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 801 and the external electronic device 804 via the server 808 coupled with the second network 899. Each of the external electronic devices 802 and 804 may be a device of a same type as, or a different type from, the electronic device 801. According to an embodiment, all or some of operations to be executed by the electronic device 801 may be executed at one or more external electronic devices (e.g., the external devices 802 and 804, and the server 808. For example, if the electronic device 801 should perform a function or a service automatically, or in response to a request from a user or another device, the electronic device 801, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 801. The electronic device 801 may provide the outcome, with or without further processing of the outcome, as at least part of a reply to the request. To that end, a cloud computing, distributed computing, mobile edge computing (MEC), or client-server computing technology may be used, for example. The electronic device 801 may provide ultra low-latency services using, e.g., distributed computing or mobile edge computing. In another embodiment, the external electronic device 804 may include an Internet-of-things (IoT) device. The server 808 may be an intelligent server using machine learning and/or a neural network. According to an embodiment, the external electronic device 804 or the server 808 may be included in the second network 899. The electronic device 801 may be applied to intelligent services (e.g., smart home, smart city, smart car, or healthcare) based on 5G communication technology or IoT-related technology.

The methods according to the embodiments described herein may be recorded in non-transitory computer-readable media including program instructions to implement various operations of the embodiments described herein. The media may also include, alone or in combination with the program instructions, data files, data structures, and the like. The program instructions recorded on the media may be those specially designed and constructed for the purposes of embodiments, or they may be of the type well-known and available to those having skill in the computer software arts. Examples of non-transitory computer-readable media include magnetic media such as, for example, hard disks, floppy disks, and magnetic tape; optical media such as, for example, CD-ROM discs, DVDs, and/or Blue-ray discs; magneto-optical media such as, for example, optical discs; and hardware devices that are specially configured to store and perform program instructions, such as, for example, read-only memory (ROM), random access memory (RAM), flash memory (e.g., USB flash drives, memory cards, memory sticks, etc.), and the like. Examples of program instructions include both machine code, such as, for example, produced by a compiler, and files containing higher-level code that may be executed by the computer using an interpreter. The devices described herein may be configured to act as one or more software modules in order to perform the operations of the embodiments described herein, or vice versa.

The software may include a computer program, a piece of code, an instruction, or some combination thereof, to independently or uniformly instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems such that the software is stored and executed in a distributed fashion. The software and data may be stored by one or more non-transitory computer-readable recording mediums.

A number of embodiments have been described herein. Nevertheless, it should be understood that various modifications and variations may be made to the example embodiments. For example, suitable results may be achieved if the described techniques are performed in a different order, and/or if components in a described system, architecture, device, or circuit are combined in a different manner, and/or replaced or supplemented by other components or their equivalents.

Accordingly, other implementations are within the scope of the following claims.

A Bluetooth device for radio control according to an embodiment may include an antenna 112 or 897 configured to transmit a first advertise message and receive a second advertise message; a Bluetooth module 114 or 892 configured to establish Bluetooth communication with a Bluetooth target; and a processor 116 or 820 configured to control the Bluetooth module 114 or 892, wherein the processor 116 or 820 may be configured to confirm Bluetooth channel information which is information about a Bluetooth channel connected with the Bluetooth target and Bluetooth signal strength information which indicates a signal strength of Bluetooth connection with the Bluetooth target, transmit the first advertise message including the Bluetooth channel information through an advertise channel at the signal strength of the connection, determine whether coordination is sufficient using a signal strength measured by a nearby Bluetooth device 120 or 130 when the second advertise message including the signal strength measured by the nearby Bluetooth device 120 or 130 is received from the nearby Bluetooth device 120 or 130 through the advertise channel, determine Bluetooth communication establishment with the Bluetooth target at the signal strength of the connection through the connected Bluetooth channel when a determination result shows that the coordination is sufficient, and adjust the signal strength of the connection with the Bluetooth target or change the Bluetooth channel connected with the Bluetooth target when a determination result shows that the coordination is insufficient.

In the Bluetooth device for radio control according to an embodiment, the processor 116 or 820 may be configured to compare a first value obtained by subtracting the signal strength of the connection from a guaranteed minimum signal strength and a second value obtained by subtracting a reference value from the signal strength measured by the nearby Bluetooth device 120 or 130 when the determination result shows that the coordination is insufficient, control the Bluetooth module 114 or 892 to lower the signal strength of the connection with the Bluetooth target by the second value if the first value is greater than or equal to the second value according to a comparison result, and re-determine whether the coordination is sufficient for the lowered signal strength of the connection.

In the Bluetooth device for radio control according to an embodiment, the processor 116 or 820 may be configured to compare a first value obtained by subtracting the signal strength of the connection from a guaranteed minimum signal strength and a second value obtained by subtracting a reference value from the signal strength measured by the nearby Bluetooth device 120 or 130 when the determination result shows that the coordination is insufficient, select a Bluetooth channel having a lowest RSSI from available Bluetooth channels if the first value is less than the second value according to a comparison result, and control the Bluetooth module 114 or 892 to establish communication with the Bluetooth target through the selected Bluetooth channel, and re-determine whether the coordination is sufficient for the selected Bluetooth channel.

In the Bluetooth device for radio control according to an embodiment, the processor 116 or 820 may be configured to control the Bluetooth module 114 or 892 to measure an RSSI of a current Bluetooth channel, when a decrease in reception rate is detected by the Bluetooth device 110, select a Bluetooth channel having a lowest RSSI from available Bluetooth channels if the RSSI of the current Bluetooth channel exceeds a reference value, and control the Bluetooth module 114 or 892 to establish communication with the Bluetooth target through the selected Bluetooth channel, and re-determine whether the coordination is sufficient for the selected Bluetooth channel.

In the Bluetooth device for radio control according to an embodiment, the processor 116 or 820 may be configured to control the Bluetooth module 114 or 892 to measure an RSSI of a current Bluetooth channel when a decrease in reception rate is detected by the Bluetooth device 110, and control the Bluetooth module 114 or 892 to maintain a current Bluetooth communication state if the RSSI of the current Bluetooth channel is less than or equal to a reference value.

In the Bluetooth device for radio control according to an embodiment, the processor 116 or 820 may be configured to determine that the coordination is sufficient if the measured signal strength received from the nearby Bluetooth device 120 or 130 is less than or equal to a reference value.

In the Bluetooth device for radio control according to an embodiment, the signal strength measured by the nearby Bluetooth device 120 or 130, included in the second advertise message, may be an RSSI when the nearby Bluetooth device 120 or 130 receives the first advertise message.

In the Bluetooth device for radio control according to an embodiment, the processor 116 or 820 may be configured to re-determine whether the coordination is sufficient for a currently connected Bluetooth channel, at time intervals preset by the Bluetooth device 110.

In the Bluetooth device for radio control according to an embodiment, the nearby Bluetooth device 120 or 130 may be configured to, when the first advertise message is received, measure a signal strength at which the first advertise message is received, generate the second advertise message including the measured signal strength, and transmit the second advertise message to the Bluetooth device 110 through the advertise channel.

A method for radio control by a Bluetooth device according to an embodiment may include a first operation 212 of confirming Bluetooth channel information which is information about a Bluetooth channel connected with a Bluetooth target and Bluetooth signal strength information which indicates a signal strength of Bluetooth connection with the Bluetooth target; a second operation 214 of transmitting a first advertise message including the Bluetooth channel information through an advertise channel at the signal strength of the connection; a third operation 216 of receiving a second advertise message including a signal strength measured by a nearby Bluetooth device 120 or 130 from the nearby Bluetooth device 120 or 130 through the advertise channel; a fourth operation 218 of determining whether coordination is sufficient using the signal strength measured by the nearby Bluetooth device 120 or 130; an operation 230 of determining Bluetooth communication establishment with the Bluetooth target at the signal strength of the connection through the connected Bluetooth channel when a determination result shows that the coordination is sufficient; and an operation of adjusting the signal strength of the connection with the Bluetooth target or changing the Bluetooth channel connected with the Bluetooth target when a determination result shows that the coordination is insufficient.

The method for radio control by a Bluetooth device according to an embodiment may further include, before the first operation 212, an operation 210 of establishing Bluetooth communication between the Bluetooth device 110 and the Bluetooth target.

In the method for radio control by a Bluetooth device according to an embodiment, the fourth operation 218 of determining whether the coordination is sufficient may include determining that the coordination is sufficient if the measured signal strength received from the nearby Bluetooth device 120 or 130 is less than or equal to a reference value.

In the method for radio control by a Bluetooth device according to an embodiment, the operation of adjusting the signal strength of the connection with the Bluetooth target or changing the Bluetooth channel connected with the Bluetooth target when the determination result shows that the coordination is insufficient may include an operation 220 of comparing a first value obtained by subtracting the signal strength of the connection from a guaranteed minimum signal strength and a second value obtained by subtracting a reference value from the signal strength measured by the nearby Bluetooth device 120 or 130; and an operation 222 of lowering the signal strength of the connection with the Bluetooth target by the second value if the first value is greater than or equal to the second value according to a comparison result, wherein the first operation 212, the second operation 214, the third operation 216, and the fourth operation 218 may be performed again, and an operation according to a determination result of the fourth operation 218 may be performed.

In the method for radio control by a Bluetooth device according to an embodiment, the operation of adjusting the signal strength of the connection with the Bluetooth target or changing the Bluetooth channel connected with the Bluetooth target when the determination result shows that the coordination is insufficient may include an operation 220 of comparing a first value obtained by subtracting the signal strength of the connection from a guaranteed minimum signal strength and a second value obtained by subtracting a reference value from the signal strength measured by the nearby Bluetooth device 120 or 130; an operation 224 of selecting a Bluetooth channel having a lowest RSSI from available Bluetooth channels if the first value is less than the second value according to a comparison result; and an operation 226 of establishing communication with the Bluetooth target through the selected Bluetooth channel, wherein the first operation 212, the second operation 214, the third operation 216, and the fourth operation 218 may be performed again, and an operation according to a determination result of the fourth operation 218 may be performed.

In the method for radio control by a Bluetooth device according to an embodiment, the signal strength measured by the nearby Bluetooth device 120 or 130, included in the second advertise message, may be an RSSI when the nearby Bluetooth device 120 or 130 receives the first advertise message.

In the method for radio control by a Bluetooth device according to an embodiment, the first advertise message may include identification information of the Bluetooth device 110 transmitting the first advertise message.

The method for radio control by a Bluetooth device according to an embodiment may further include an operation 412 of measuring an RSSI of a current Bluetooth channel, when a decrease in reception rate is detected by the Bluetooth device 110 in operation 410; and an operation 416 of maintaining a current Bluetooth communication state if the RSSI of the current Bluetooth channel is less than or equal to a reference value in operation 414.

The method for radio control by a Bluetooth device according to an embodiment may further include an operation 412 of measuring an RSSI of a current Bluetooth channel, when a decrease in reception rate is detected by the Bluetooth device 110 in operation 410; an operation 418 of selecting a Bluetooth channel having a lowest RSSI from available Bluetooth channels if the RSSI of the current Bluetooth channel exceeds a reference value in operation 414; and an operation 420 of establishing communication with the Bluetooth target through the selected Bluetooth channel, wherein the first operation 212, the second operation 214, the third operation 216, and the fourth operation 218 may be performed again, and an operation according to a determination result of the fourth operation 218 may be performed.

In the method for radio control by a Bluetooth device according to an embodiment, the first operation 212, the second operation 214, the third operation 216, and the fourth operation 218 may be performed again at time intervals preset by the Bluetooth device 110, and an operation according to a determination result of the fourth operation 218 may be performed.

In the method for radio control by a Bluetooth device according to an embodiment, the nearby Bluetooth device 120 or 130 may include, when the first advertise message is received in operation 310, an operation 312 of measuring a signal strength at which the first advertise message is received; and an operation 314 of generating the second advertise message including the measured signal strength and transmitting the second advertise message to the Bluetooth device 110 through the advertise channel.

## Claims

1. A Bluetooth device for radio control, the Bluetooth device comprising:
an antenna (112, 897) configured to transmit a first advertise message and receive a second advertise message;
a Bluetooth module (114, 892) configured to establish Bluetooth communication with a Bluetooth target; and
a processor (116, 820) configured to control the Bluetooth module (114, 892), wherein
the processor (116, 820) is configured to
confirm Bluetooth channel information which is information about a Bluetooth channel connected with the Bluetooth target and Bluetooth signal strength information which indicates a signal strength of Bluetooth connection with the Bluetooth target,
transmit the first advertise message comprising the Bluetooth channel information through an advertise channel at the signal strength of the connection,
determine whether coordination is sufficient using a signal strength measured by a nearby Bluetooth device (120, 130) when the second advertise message comprising the signal strength measured by the nearby Bluetooth device (120, 130) is received from the nearby Bluetooth device (120, 130) through the advertise channel,
determine Bluetooth communication establishment with the Bluetooth target at the signal strength of the connection through the connected Bluetooth channel when a determination result shows that the coordination is sufficient, and
adjust the signal strength of the connection with the Bluetooth target or change the Bluetooth channel connected with the Bluetooth target when a determination result shows that the coordination is insufficient.

2. The Bluetooth device of claim 1, wherein
the processor (116, 820) is configured to
compare a first value obtained by subtracting the signal strength of the connection from a guaranteed minimum signal strength and a second value obtained by subtracting a reference value from the signal strength measured by the nearby Bluetooth device (120, 130) when the determination result shows that the coordination is insufficient,
control the Bluetooth module (114, 892) to lower the signal strength of the connection with the Bluetooth target by the second value if the first value is greater than or equal to the second value according to a comparison result, and
re-determine whether the coordination is sufficient for the lowered signal strength of the connection.

3. The Bluetooth device of claim 1, wherein
the processor (116, 820) is configured to
compare a first value obtained by subtracting the signal strength of the connection from a guaranteed minimum signal strength and a second value obtained by subtracting a reference value from the signal strength measured by the nearby Bluetooth device (120, 130) when the determination result shows that the coordination is insufficient,
select a Bluetooth channel having a lowest received signal strength indicator (RSSI) from available Bluetooth channels if the first value is less than the second value according to a comparison result, and control the Bluetooth module (114, 892) to establish communication with the Bluetooth target through the selected Bluetooth channel, and
re-determine whether the coordination is sufficient for the selected Bluetooth channel.

4. The Bluetooth device of claim 1, wherein
the processor (116, 820) is configured to
control the Bluetooth module (114, 892) to measure an RSSI of a current Bluetooth channel, when a decrease in reception rate is detected by the Bluetooth device (110),
select a Bluetooth channel having a lowest RSSI from available Bluetooth channels if the RSSI of the current Bluetooth channel exceeds a reference value, and control the Bluetooth module (114, 892) to establish communication with the Bluetooth target through the selected Bluetooth channel, and
re-determine whether the coordination is sufficient for the selected Bluetooth channel.

5. The Bluetooth device of claim 1, wherein
the processor (116, 820) is configured to control the Bluetooth module (114, 892) to measure an RSSI of a current Bluetooth channel when a decrease in reception rate is detected by the Bluetooth device (110), and control the Bluetooth module (114, 892) to maintain a current Bluetooth communication state if the RSSI of the current Bluetooth channel is less than or equal to a reference value.

6. The Bluetooth device of claim 1, wherein
the processor (116, 820) is configured to determine that the coordination is sufficient if the measured signal strength received from the nearby Bluetooth device (120, 130) is less than or equal to a reference value.

7. The Bluetooth device of claim 1, wherein
the signal strength measured by the nearby Bluetooth device (120, 130), included in the second advertise message, is an RSSI when the nearby Bluetooth device (120, 130) receives the first advertise message.

8. The Bluetooth device of claim 1, wherein
the processor (116, 820) is configured to re-determine whether the coordination is sufficient for a currently connected Bluetooth channel, at time intervals preset by the Bluetooth device (110).

9. The Bluetooth device of claim 1, wherein
the nearby Bluetooth device (120, 130) is configured to, when the first advertise message is received, measure a signal strength at which the first advertise message is received, generate the second advertise message comprising the measured signal strength, and transmit the second advertise message to the Bluetooth device (110) through the advertise channel.

10. A method for radio control by a Bluetooth device, the method comprising:
a first operation (212) of confirming Bluetooth channel information which is information about a Bluetooth channel connected with a Bluetooth target and Bluetooth signal strength information which indicates a signal strength of Bluetooth connection with the Bluetooth target;
a second operation (214) of transmitting a first advertise message comprising the Bluetooth channel information through an advertise channel at the signal strength of the connection;
a third operation (216) of receiving a second advertise message comprising a signal strength measured by a nearby Bluetooth device (120, 130) from the nearby Bluetooth device (120, 130) through the advertise channel;
a fourth operation (218) of determining whether coordination is sufficient using the signal strength measured by the nearby Bluetooth device (120, 130);
an operation (230) of determining Bluetooth communication establishment with the Bluetooth target at the signal strength of the connection through the connected Bluetooth channel when a determination result shows that the coordination is sufficient; and
an operation of adjusting the signal strength of the connection with the Bluetooth target or changing the Bluetooth channel connected with the Bluetooth target when a determination result shows that the coordination is insufficient.

11. The method of claim 10, wherein
the operation of adjusting the signal strength of the connection with the Bluetooth target or changing the Bluetooth channel connected with the Bluetooth target when the determination result shows that the coordination is insufficient comprises:
an operation (220) of comparing a first value obtained by subtracting the signal strength of the connection from a guaranteed minimum signal strength and a second value obtained by subtracting a reference value from the signal strength measured by the nearby Bluetooth device (120, 130); and
an operation (222) of lowering the signal strength of the connection with the Bluetooth target by the second value if the first value is greater than or equal to the second value according to a comparison result, wherein
the first operation (212), the second operation (214), the third operation (216), and the fourth operation (218) are performed again, and an operation according to a determination result of the fourth operation (218) is performed.

12. The method of claim 10, wherein
the operation of adjusting the signal strength of the connection with the Bluetooth target or changing the Bluetooth channel connected with the Bluetooth target when the determination result shows that the coordination is insufficient comprises:
an operation (220) of comparing a first value obtained by subtracting the signal strength of the connection from a guaranteed minimum signal strength and a second value obtained by subtracting a reference value from the signal strength measured by the nearby Bluetooth device (120, 130);
an operation (224) of selecting a Bluetooth channel having a lowest received signal strength indicator (RSSI) from available Bluetooth channels if the first value is less than the second value according to a comparison result; and
an operation (226) of establishing communication with the Bluetooth target through the selected Bluetooth channel, wherein
the first operation (212), the second operation (214), the third operation (216), and the fourth operation (218) are performed again, and an operation according to a determination result of the fourth operation (218) is performed.

13. The method of claim 10, further comprising:
an operation (412) of measuring a received signal strength indicator (RSSI) of a current Bluetooth channel, when a decrease in reception rate is detected by the Bluetooth device (110) (410); and
an operation (416) of maintaining a current Bluetooth communication state if the RSSI of the current Bluetooth channel is less than or equal to a reference value (414).

14. The method of claim 10, further comprising:
an operation (412) of measuring an RSSI of a current Bluetooth channel, when a decrease in reception rate is detected by the Bluetooth device (110) (410);
an operation (418) of selecting a Bluetooth channel having a lowest RSSI from available Bluetooth channels if the RSSI of the current Bluetooth channel exceeds a reference value (414); and
an operation (420) of establishing communication with the Bluetooth target through the selected Bluetooth channel, wherein
the first operation (212), the second operation (214), the third operation (216), and the fourth operation (218) are performed again, and an operation according to a determination result of the fourth operation (218) is performed.

15. The method of claim 10, wherein
the nearby Bluetooth device (120, 130) comprises:
when the first advertise message is received (310), an operation (312) of measuring a signal strength at which the first advertise message is received; and
an operation (314) of generating the second advertise message comprising the measured signal strength and transmitting the second advertise message to the Bluetooth device (110) through the advertise channel.
